# DEMANDE DE BREVET EUROPEEN

(11) **EP 1 092 698 A2**
(43) Date de publication de la demande: **18.04.2001**
(21) Numéro de dépôt: 00402759.5
(22) Date de dépôt: 06.10.2000
(51) Int. Cl.: C05F 5/00, C05F 11/00, C05G 3/00

(54) **Amendement pour sol dérivé de déchets de plantes à fibres, procédé de fabrication et utilisation**

(30) Priorité: 14.10.1999 FR 9912808
(71) Demandeur: Société Coopérative Agricole La Chanvriere de l'Aube, 10200 Bar sur Aube (FR)
(72) Inventeur: Ruelle, Nicolas, 10200 Bar sur Aube (FR)
(74) Mandataire: Lhuillier, René

(57) **Abrégé**

L'invention concerne un amendement pour la fertilisation des sols et son procédé de préparation à partir de déchets végétaux poussiéreux dérivés de l'exploitation de plantes à fibres (chanvre et lin). Son utilisation est particulièrement appropriée en viticulture.

## Description

L'invention concerne un procédé de récupération et de valorisation de déchets constitués de poudres et de poussières résultant de la transformation industrielle de plantes à fibres comme le chanvre et le lin.

L'invention concerne également un amendement pour sol, préparé à partir de ces déchets végétaux poussiéreux. Cet amendement est destiné à la fertilisation des sols pour les cultures ; il est notamment particulièrement favorable à la viticulture.

En Europe, l'utilisation de matières fertilisantes et de supports de cultures est étroitement contrôlée par les lois nationales et les règlements communautaires. En effet les apports destinés à fertiliser les sols ne peuvent avoir de conséquences néfastes sur la pollution des eaux, en particulier par les nitrates d'origine agricole.

Les produits destinés à l'amélioration des qualités physiques et nutritionnelles des sols, les plus conformes aux critères de protection de l'environnement, sont des produits à base de matières organiques d'origine végétale. Ces produits peuvent avoir subi une fermentation ou peuvent être constitués de matières végétales non fermentées mais fermentescibles et peuvent contenir des doses acceptables de déjections d'origine animale.

La notion d'"amendements pour sol" a été définie par la Commission des Communautés européennes (Décision du 7 avril 1998, 98/488/CE publiée au JO 1998 L 219/39) comme : "Substances vendues en tant que produits finis en vue du jardinage, et destinées à être incorporées au sol afin d'en améliorer au moins les propriétés physiques et biologiques sans porter atteinte à l'environnement".

Outre l'amélioration des qualités du sol, les amendements peuvent contribuer au recyclage des matières organiques provenant de divers déchets. Le traitement et l'utilisation de tels déchets et, par conséquent la limitation des quantités de déchets solides, sont vivement encouragés par la Commission des Communautés européennes qui attribue un label écologique (directive 75/442/CEE) aux matières organiques issues de déchets retraités ou recyclés.

C'est dans cet esprit que la Demanderesse a envisagé de recycler des déchets dérivés de l'utilisation industrielle des plantes à fibres, comme le chanvre ou le lin.

Historiquement, la fibre de chanvre était surtout utilisée pour fabriquer le papier à cigarettes et le papier monnaie. Actuellement, elle trouve de nombreux autres débouchés sous forme de papiers, textiles, cordes, matériaux pour le bâtiment, litières...

Ainsi une société comme "La Chanvrière de l'Aube" traite 40.000 tonnes de plantes de chanvre (à l'état de balles pressées chez l'agriculteur) par an et produit 14.000 tonnes de fibres et 20.000 de chènevotte. Cette activité industrielle produit également 6.000 tonnes de déchets à l'état de poudre et de poussière.

C'est donc un objet de la présente invention de recycler cette masse importante de déchets en la transformant en un amendement pour sol. Les exemples qui suivent décrivent en particulier le recyclage des poudres et poussières, sous-produit de la transformation industrielle du chanvre. On pourrait évidemment recycler, de la même façon les sous-produits de l'exploitation du lin ou de toute autre plante à fibres.

Le procédé de récupération des déchets et de préparation de l'amendement pour sol, selon l'invention, comprend les étapes suivantes :
- extraction mécanique des différentes parties de la plante et défibrage ;
- récupération des déchets à l'état de poudre ;
- contrôle de qualité ;
- granulation par compactage ou tamisage forcé ;
- conditionnement.

La récupération de la poudre s'effectue par aspiration, sur un séparateur rotatif muni de tôles perforées calibrées, suivie de filtration sur manches en textiles et récupération au travers d'une trémie.

Le contrôle de qualité comprend la mesure de l'humidité, la détermination de la quantité de matière organique, la détection des métaux lourds, le contrôle de l'homogénéité, le contrôle de l'absence de germes pathogènes, le contrôle de l'absence d'odeurs.

La granulation de la poudre s'effectue par passage au travers de cylindres creusés selon un axe radial dans une roue dont la rotation exerce une pression sur la poudre, entraînant son compactage.

L'amendement pour sol obtenu par ce procédé a été analysé selon les méthodes et critères définis à l'INRA et publiés par Linières et Djakovitch (Matières organiques et agriculture - 4^{ème} Journée de l'analyse de terre et 5^{ème} forum de la fertilisation raisonnée - 1993, p 159-168) et par Robin (Agronomie 17, 1997, p 157-171).

Cette analyse permet de déterminer les teneurs en eau, en matières minérales et organiques et, plus particulièrement, d'analyser, dans la fraction organique, la proportion de composés solubles, hémicellulosiques, cellulosiques et de type lignine.

Cette caractérisation permet de classer le produit en fonction de son usage agronomique potentiel et plus particulièrement, d'estimer son "potentiel humique", c'est-à-dire la quantité potentielle d'humus stable restant après décomposition du produit dans le sol (exprimée en kg d'humus par tonne de produit).

Les analyses ont montré que l'amendement pour sol selon l'invention
- présente un potentiel humique supérieur à 200 kg par tonne de produit brut et supérieur à 300 kg par tonne de matière sèche
- contient au moins 65 % de matières organiques
- et que celles-ci comprennent de 15 à 25 % d'hémicelluloses, de 40 à 50 % de cellulose et 8 à 15 % de lignine.
Il comprend, en outre, une microflore bactérienne naturelle activatrice de la biodégradabilité.

L'amendement pour sol selon l'invention peut être utilisé dans n'importe quel type de culture, selon les réglementations et la législation en vigueur. Concernant le chanvre, il est particulièrement avantageux parce qu'il est le sous-produit de l'exploitation d'une plante dont la culture ne demande aucun pesticide. C'est donc un additif de choix à la fois pour l'environnement et pour la culture à laquelle il est destiné, puisqu'il est totalement dépourvu de produit chimique.

Par sa structure en granulés de microfibres, il participe à l'allégement du sol et, de plus, il améliore sa capacité de rétention d'eau ce qui réduit la sensibilité des plantes aux périodes sèches. Son utilisation est particulièrement favorable dans le domaine de la viticulture. Elle convient également pour l'arboriculture, pour les cultures légumières, pour les cultures florales.

Les exemples suivants illustrent l'invention sans toutefois en limiter la portée.

### Exemple 1 - Procédé de préparation de l'amendement pour sol dérivé de poudre de chanvre.

Les tiges de chanvre sont récoltées au champ au moyen d'une presse agricole à balles rondes et sont stockées chez l'agriculteur.

Le procédé de transformation à l'usine comprend
- la découpe au moyen de cisailles hydrauliques,
- le transport des coupons au moyen de convoyeurs à bandes,
- la régulation des flux par chargeuse et ouvreuse à tambours,
- le défibrage (action de détacher les fibres et les particules de chènevotte) au moyen de broyeurs à marteaux.

Cette action de défibrage provoque l'apparition de fines particules appelées poudres qui représentent environ 15 % de la masse de la matière première.

Leur transfert pneumatique est assuré vers un séparateur rotatif muni de tôles perforées calibrées au travers desquelles se produit une forte aspiration, qui entraîne les poudres.

Le flux d'air chargé de poudres, ainsi constitué, est réceptionné par une centrale de filtration composée de manches en textile, au travers desquelles seul l'air propre peut circuler : les poudres sont stoppées par les manches textiles et recueillies dans une trémie, vidangée en continu par une écluse alvéolaire.

Les poudres ainsi concentrées sont transportées au moyen de vis d'Archimède successives jusqu'à une cellule de stockage ou un camion pour l'expédition vers le site de granulation.

Le compactage ou granulation de la poudre concentrée est effectué sur une presse à granuler. La poudre traverse des cylindres de diamètre légèrement inférieur à celui des granulés qui seront obtenus. Le frottement de la poudre sur les parois des cylindres provoque un phénomène de compression qui assure la cohésion de la poudre et donne ainsi naissance aux granulés.

Les cylindres sont des perforations créées sur une roue en acier appelée filière, disposées selon un axe radial, cette roue est mise en rotation. La poudre est poussée dans les perforations par des galets qui roulent dans la roue.

Les granulés sortant de la filière sont coupés à la dimension souhaitée par un couteau et sont refroidis par circulation d'air, le passage dans la filière les ayant échauffés.

Les granulés sont ensuite tamisés afin d'éliminer les petits fragments, qui sont réintroduits dans la presse à granuler.

Les granulés de la qualité requise sont ensuite conditionnés.

### Exemple 2 - Analyse du produit.

Le produit fini est analysé conformément à la méthode de Robin, 1997, cité plus haut. Les résultats sont présentés dans le tableau suivant :

| **Composition de la poudre végétale, en %** | |
|---|---|
| Fraction soluble | 18,0 |
| Hémicelluloses | 13,5 |
| Cellulose | 29,0 |
| Lignine | 7,0 |
| **Total matières organiques** | 67,5 |
| Matières minérales | 22,0 |
| Eau | 10,5 |

L'analyse de la matière sèche du produit permet de le classer comme "amendement organique". Il présente un potentiel humique moyen de 222 kg d'humus stable par tonne de produit brut.

Exemple 3 - Utilisation de l'amendement pour sol. L'amendement pour sol est prêt à l'utilisation, sous forme de granulés.

Les doses d'emploi recommandées sont les suivantes.
- En viticulture et arboriculture :
   - pour l'entretien 2 à 4 tonnes/ha/an
   - pour la plantation 6 à 12 tonnes par hectare
   - pour le remplacement des 1 à 2 kg par pied pieds
- En cultures légumières :
   - en plein champ 3 à 6 tonnes/ha/an
   - sous serre 0,4 à 0,8 kg/m²/an
- En cultures florales :
   - en plein champ 4 à 10 tonnes/ha/an
   - sous serre 0,6 à 1,2 kg/m²/an

## Revendications

1. Procédé de récupération et de valorisation de déchets constitués de poudres et de poussières résultant de la transformation industrielle de plantes à fibres comme le chanvre et le lin, caractérisé en ce qu'il comprend :
- l'aspiration des déchets résultant de l'extraction mécanique des différentes parties des plantes et de leur défibrage ;
- le contrôle de qualité des déchets recueillis ;
- le compactage et la granulation des déchets par tamisage forcé ;
- le conditionnement en vue de l'utilisation comme amendement pour sol.

2. Procédé selon la revendication 1 caractérisé en ce que la récupération de la poudre et des poussières s'effectue par aspiration, sur un séparateur rotatif muni de tôles perforées calibrées, suivie de filtration sur manches en textile et récupération au travers d'une trémie.

3. Procédé selon la revendication 1 caractérisé en ce que le contrôle de qualité comprend la mesure de l'humidité, la détermination de la quantité de matière organique, la détection des métaux lourds, le contrôle de l'homogénéité, le contrôle de l'absence de germes pathogènes, le contrôle de l'absence d'odeurs.

4. Procédé selon la revendication 1 caractérisé en ce que la granulation de la poudre s'effectue par passage au travers de cylindres creusés selon un axe radial dans une roue dont la rotation exerce une pression sur la poudre, entraînant son compactage.

5. Amendement pour sol, caractérisé en ce qu'il est préparé par le procédé selon l'une quelconque des revendications 1 à 4, à partir de poudres et poussières, sous-produits de la transformation industrielle de plantes à fibres comme le chanvre et le lin et considérés comme déchets.

6. Amendement pour sol selon la revendication 5, caractérisé en ce qu'il présente un potentiel humique supérieur à 200 kg par tonne du produit brut et supérieur à 300 kg par tonne de matière sèche.

7. Amendement pour sol selon la revendication 5 ou 6, caractérisé en ce qu'il contient au moins 65 % de matières organiques.

8. Amendement pour sol selon l'une quelconque des revendications 5 à 7, caractérisé en ce que les matières organiques comprennent de 12 à 20 % d'hémicelluloses, de 25 à 50 % de cellulose et de 6 à 15 % de lignine.

9. Utilisation de l'amendement pour sol selon l'une quelconque des revendications 5 à 8 pour la viticulture et l'arboriculture, pour les cultures légumières, pour les cultures florales.
